# EUROPEAN PATENT SPECIFICATION

(11) **EP 1 927 176 B1**
(45) Date of publication and mention of the grant of the patent: **20.11.2019**
(21) Application number: 06795857.9
(22) Date of filing: 01.09.2006
(51) Int. Cl.: H02J 7/00, H02J 7/02, H01F 38/14, H01F 5/00, H02J 50/12

(54) **DEVICE FOR RECHARGING BATTERIES**
BATTERIEAUFLADEVORRICHTUNG
DISPOSITIF SERVANT A RECHARGER DES BATTERIES

(30) Priority: 12.09.2005 EP 05108353
(43) Date of publication of application: 04.06.2008
(73) Proprietor: Philips Intellectual Property & Standards GmbH, 20099 Hamburg (DE); Koninklijke Philips N.V., 5656 AE Eindhoven (NL)
(72) Inventor: SCHULZ, Volkmar, 52066 Aachen (DE)
(74) Representative: Bekkers, Joost J.J.
(86) International application number: PCT/IB2006/053052
(87) International publication number: WO 2007/031897

(56) References cited:
- WO-A1-03/105308
- GB-A- 2 389 720
- GB-A- 2 398 176
- GB-A- 2 399 228
- JP-A- 7 231 586
- US-A- 6 008 622
- US-B1- 6 400 991

## Description

The invention relates to a device for recharging batteries, the device having a circuit, which comprises at least a first coil in a first layer and at least a second coil in a second layer.

WO2003105308A1 describes an inductive charging device, comprising multiple primary coils arranged in multiple layers.

US-A-6 008 622 discloses a non contact charging equipment, used to supply electric power by electromagnetic induction. A plurality of coils on the power transmitting side and the power receiving side are arranged at opposed position and with a spacing so that magnetic fluxes generated by adjacent coils are directed in reverse directions. The adjacent coils of the power transmitting side are arranged side by side. Heat generated on the power receiving side is radiated by a battery can.

JP 07 231586 A discloses a cordless power station which transmits power by non contact according to the electromagnetic-induction operation produced between coils. Secondary coils act as opposing coils and receive magnetic flux inducing current.

Such a device for recharging batteries is known from GB 2389720. Printed circuit boards are etched in such a way that spiral-shaped coils are arranged in a plurality of layers. In this connection, the turns of a coil lie in one layer. A high magnetic flux density is obtained if at least two layers are laid on top of each other in such a way that the turns of the coils having the same winding direction are mutually offset. It is a drawback that these magnetic fields are scattered over a large area and hence unintentionally affect electromechanical and biological systems. Therefore, larger power outputs cannot be transferred in this way.

To this end, it is an object of the invention to improve a device for recharging batteries and units having rechargeable batteries. Particularly, the stray magnetic field should be limited and a larger power consumption should be made possible.

This object is achieved by a device for recharging batteries, the device having a circuit which comprises at least one first coil in a first layer, and at least one second coil in a second layer. The first layer and the second layer are parallel to each other. The at least one first coil in the first layer and the at least one second coil in the second layer both have an outer diameter, and they are arranged around a common central axis, and they are separated by a distance, and are further arranged to have magnetic fields in opposite directions.

This object is also achieved in accordance with the characteristic features of the dependent claims. According to the invention, the coils having magnetic fields in opposite directions are arranged on top of each other. The opposed magnetic fields cancel each other out in the remote range.

In a simple way, the coils have the same inductance. A simple coil geometry and a simple geometrical arrangement of the coils can be obtained with the same inductance of the coils.

The coils are connected in parallel. If a rechargeable unit is arranged above the coils, the current of the parallel connection changes in such a way that more current flows in the upper coil than in the lower coil during the recharging process. The unit is recharged. The current is evenly distributed in the parallel branches without any load.

The coils having magnetic fields in opposite directions are arranged on top of each other. The recharging process is supported by a direct arrangement of the coils on top of each other.

Advantageously, the superposed coils are spaced apart by one twentieth of the outer diameter of a coil to once said outer diameter, advantageously by one fourth of the outer diameter. A distance of a diameter equal to one fourth of the outer coil winding has proved advantageous for both the recharging process and canceling the magnetic field in the remote range. There is a stronger coupling with the upper coil at a distance of one fourth of the diameter.

Advantageously, the coils overlap in such a way and have such a mutually geometry, that the coils are magnetically decoupled from their direct neighbors. The mutually offset coils overlap in such a way and have such a mutual geometry that direct neighbors are decoupled.

Advantageously, at least one magnetically conductive core is arranged between the coils. If one core, yet preferably two cores are provided between the coils, magnetic lines of flux run inside the two cores and thus superposed coils hardly affect each other. Thus, with the same effect, the distance between the coils can be reduced and the unit can be made flatter. The distance between the coils can then be reduced from one fortieth to one four hundredth of the outer diameter of the coil. The core is also referred to as iron core or ferrite core.

Advantageously, the turns of a coil are arranged spirally in a plane. Manufacture is simplified by this geometry.

Advantageously, the device has a planar surface. Units can then be positioned more easily on the device.

Advantageously, the circuit has an on-off switch. The current can be reduced using the on-off switch and the device is switched on only during the recharging process.

The on-off switch is simply a diode. The diode is biased during operation, i.e. during the recharging process.

These and other aspects of the invention are apparent from and will be elucidated with reference to the embodiments described hereinafter.

In the drawings:
Fig. 1A is a plan view of a schematic representation of a device comprising a circuit having a control unit and coils,
Fig. 1B shows a sectional side view of the device having the coils,
Fig. 2 shows an equivalent circuit diagram of two superposed parallel-connected coils having magnetic fields in opposite directions,
Fig. 3 shows a further equivalent circuit diagram of two superposed parallel-connected coils having magnetic fields in opposite directions and two magnetic cores between the coils,
Fig. 4 shows an equivalent circuit diagram having a diode for switching a coil arrangement on and off, and
Fig. 5 shows an equivalent circuit diagram of an electric circuit for a unit to be recharged having a resonant circuit.

Similar or identical elements are denoted by the same reference symbols in different Figures.

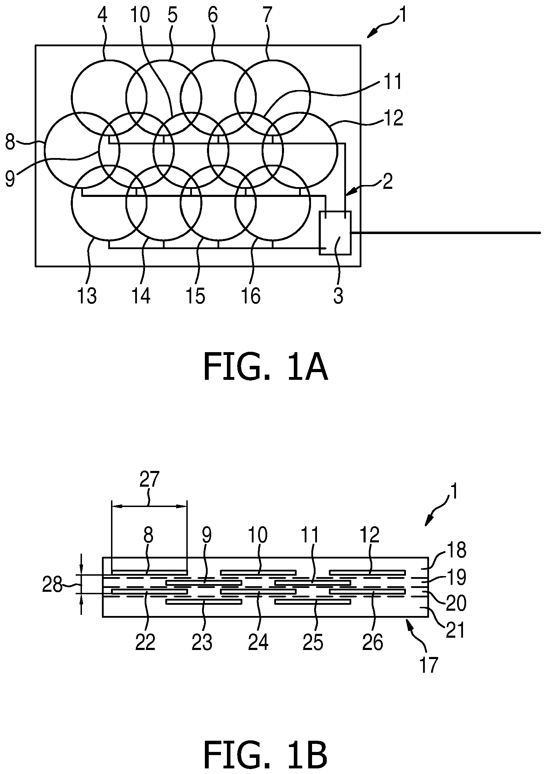

Figs. 1A and 1B show a device 1 for recharging batteries, the device comprising a circuit 2. The circuit 2 has a power control unit 3 with a frequency converter and a control unit for switching on and off. Furthermore, the circuit 2 has coils 4-16 for inductive coupling. The device 1 is a flexible pad having a flexible, multi-layered printed circuit board 17, which has four layers 18-21. The device 1 is also referred to in English as an inductive power pad, IPP for short. The coils 4-16 overlap each other and are mutually offset. The overlap and geometry of the coils 4-16 is selected in such a way that adjacent coils 4-16 do not interact with each other magnetically. The coils 4-7 are connected in parallel and are supplied with current by the power control unit 3. A second parallel connection of the coils 8-12 and a third parallel connection of the coils 12-16 is likewise supplied with current by the power control unit 3. In further layers 20 and 21, further coils 22-26 are arranged below the parallel-connected coils 8-12, which coils are arranged in two layers 18 and 19. In each case, two coils 8 and 22, 9 and 23, 10 and 24, 11 and 25, 12 and 26 are arranged exactly on top of each other and connected in parallel. The coils have an outer diameter 27 and superposed coils are separated from each other by a distance 28. The distance 28 is one fourth of the outer coil diameter 27; the diameter of the outer coil turn is taken as a basis.

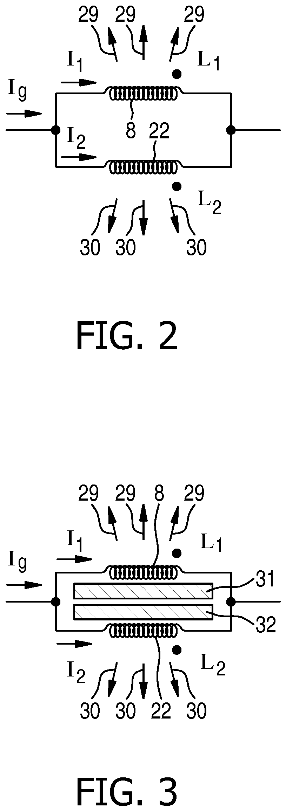

Fig. 2 shows the two superposed coils 8 and 22 in a parallel connection, which have the same inductances (L1=L2). The coils 8 and 22 are spiral-shaped and are connected in such a way that magnetic fields 29 and 30 are formed in opposite directions. An overall current Ig flows through the coils, which current splits up into two equally large parallel currents I1 and 12 in the neutral position. If a unit placed above the coil 8 on the device 1 is recharged, the upper coil 8 is loaded more than the lower coil 22 due to inductive coupling. The current I1 is then larger than the current 12.

Fig. 3 shows two ferrite cores 31 and 32 arranged between the coils 8 and 22, such that an inductive coupling of the two coils 8 and 22 is impaired. The distance 28 between the coils 8 and 22 is reduced once again.

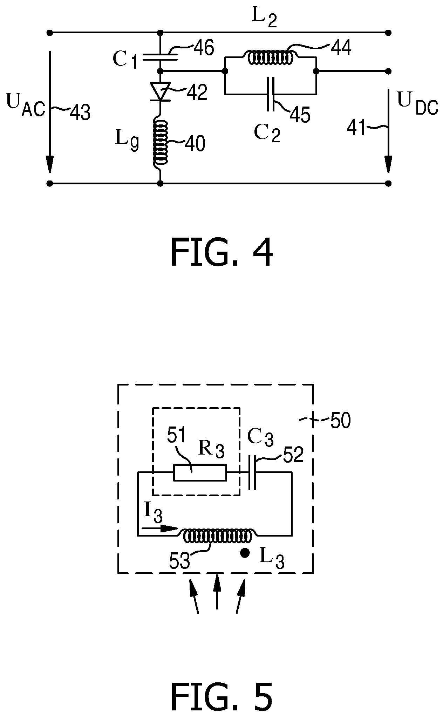

Fig. 4 shows a coil arrangement 40, which is denoted as Lg and represents one or a plurality of superposed, parallel-connected coil pairs 8 and 22, 9 and 23, 10 and 24, 11 and 25, 12 and 26. If a diode voltage 41, denoted as UDC, is applied, a diode 42 is biased and released. By applying an alternating voltage 43, denoted as UAC, current can flow through the coil arrangement Lg and a unit can be recharged. When applying the alternating voltage UAC, it can be verified whether the impedance of the coil arrangement Lg has changed. An impedance change occurs when a rechargeable unit rests on the pad 1. Verification is possible within milliseconds or also seconds. A coil 44 and a capacitor 45 form a parallel circuit, which is connected in series with a capacitor 46. The coil 44 and the capacitors 45 and 46 are also denoted as L2, C2 and C1. This series arrangement of the electronic components 44, 45, 46 prevents a coupling between the AC and DC voltages 41 and 43.

Fig. 5 shows a rechargeable unit 50 having a battery 51, also denoted as R3, a capacitor 52, also denoted as C3 and a coil 53, also denoted as L3. The coil 53 can be coupled inductively with at least one of the coils 4-16, so that the battery 51 is rechargeable. The coil 53 and the capacitor 52 form a resonant circuit, so that the battery 51 can be effectively recharged.

## Claims

1. A device (1) for recharging batteries, the device having a circuit (2), which comprises at least one first coil (8-12) in a first layer (18, 19) and at least one second coil (22-26) in a second layer (20, 21), the first layer and the second layer being parallel to each other, **characterized in that** the at least one first coil in the first layer and the at least one second coil in the second layer both have an outer diameter (27) and are arranged around a common central axis and are separated by a distance (28), have the same inductance (L1, L2) and are further connected in parallel in such a way that the first coil and the second coil form magnetic fields (29, 30) in opposite directions.

2. A device as claimed in claim 1, **characterized in that** the distance is one twentieth of the outer diameter (27) to once said outer diameter (27), advantageously by one fourth of the outer diameter (27).

3. A device as claimed in any one of the preceding claim 1 or 2, **characterized in that** at least one magnetically conductive core (31, 32) is arranged between the at least one first coil in the first layer (8) and the at least one second coil in the second layer (22).

4. A device as claimed in any one of the preceding claims 1 to 3, **characterized in that** the turns of the at least one first coil in the first layer (4-16) are arranged spirally in a plane.

5. A device as claimed in any one of the preceding claims 1 to 4, **characterized in that** the device (1) has a planar surface.

6. A device as claimed in claim 1, **characterized in that** the circuit (2) has an on-off switch (42).

7. A device as claimed in claim 6, **characterized in that** the on-off switch (42) is a diode.

## Patentansprüche

1. Batterieaufladevorrichtung (1), wobei die Vorrichtung eine Schaltung (2) aufweist, die mindestens eine erste Spule (8-12) in einer ersten Schicht (18, 19) und mindestens eine zweite Spule (22-26) in einer zweiten Schicht (20, 21) umfasst, wobei die erste Schicht und die zweite Schicht parallel zueinander sind, **dadurch gekennzeichnet, dass** die mindestens eine erste Spule in der ersten Schicht und die mindestens eine zweite Spule in der zweiten Schicht jeweils einen Außendurchmesser (27) haben und um eine gemeinsame Mittelachse angeordnet und durch einen Abstand (28) getrennt sind, dieselbe Induktanz (L1, L2) aufweisen und weiter parallel so verbunden sind, dass die erste Spule und die zweite Spule Magnetfelder (29, 30) in entgegengesetzten Richtungen bilden.

2. Vorrichtung nach Anspruch 1, **dadurch gekennzeichnet, dass** der Abstand ein Zwanzigstel des Außendurchmessers (27) bis einmal der Außendurchmesser (27) ist, vorteilhafter Weise ein Viertel des Außendurchmessers (27).

3. Vorrichtung nach einem der vorstehenden Anspruch 1 oder 2, **dadurch gekennzeichnet, dass** mindestens ein magnetisch leitfähiger Kern (31, 32) zwischen der mindestens einen ersten Spule in der ersten Schicht (8) und der mindestens einen zweiten Spule in der zweiten Schicht (22) angeordnet ist.

4. Vorrichtung nach einem der vorstehenden Ansprüche 1 bis 3, **dadurch gekennzeichnet, dass** die Windungen der mindestens einen ersten Spule in der ersten Schicht (4-16) spiralförmig in einer Ebene angeordnet sind.

5. Vorrichtung nach einem der vorstehenden Ansprüche 1 bis 4, **dadurch gekennzeichnet, dass** die Vorrichtung (1) eine ebene Oberfläche hat.

6. Vorrichtung nach Anspruch 1, **dadurch gekennzeichnet, dass** die Schaltung (2) einen Ein-Aus-Schalter (42) aufweist.

7. Vorrichtung nach Anspruch 6, **dadurch gekennzeichnet, dass** der Ein-Aus-Schalter (42) eine Diode ist.

## Revendications

1. Dispositif (1) pour recharger des batteries, le dispositif ayant un circuit (2), qui comprend au moins une première bobine (8-12) dans une première couche (18, 19) et au moins une seconde bobine (22-26) dans une seconde couche (20, 21), la première couche et la seconde couche étant parallèles l'une à l'autre, **caractérisé en ce que** l'au moins une première bobine dans la première couche et l'au moins une seconde bobine dans la seconde couche ont toutes les deux un diamètre externe (27) et sont agencées autour d'un axe central commun et sont séparées par une distance (28), ont la même inductance (L1, L2) et sont en outre connectées en parallèle de telle sorte que la première bobine et la seconde bobine forment des champs magnétiques (29, 30) dans des directions opposées.

2. Dispositif selon la revendication 1, **caractérisé en ce que** la distance est un vingtième du diamètre externe (27) à une fois ledit diamètre externe (27), avantageusement le quart du diamètre externe (27).

3. Dispositif selon l'une quelconque de la revendication précédente 1 ou 2, **caractérisé en ce qu'**au moins un noyau magnétiquement conducteur (31, 32) est agencé entre l'au moins une première bobine dans la première couche (8) et l'au moins une seconde bobine dans la seconde couche (22).

4. Dispositif selon l'une quelconque des revendications précédentes 1 à 3, **caractérisé en ce que** les spires de l'au moins une première bobine dans la première couche (4-16) sont agencées en spirale dans un plan.

5. Dispositif selon l'une quelconque des revendications précédentes 1 à 4, **caractérisé en ce que** le dispositif (1) a une surface planaire.

6. Dispositif selon la revendication 1, **caractérisé en ce que** le circuit (2) a un commutateur de marche-arrêt (42).

7. Dispositif selon la revendication 6, **caractérisé en ce que** le commutateur de marche-arrêt (42) est une diode.
